Europäisches Patentamt

(19) European Patent Office

Office européen des brevets

(11) Numéro de publication: **0 245 314**
**B1**

(12) **FASCICULE DE BREVET EUROPÉEN**

(45) Date de publication du fascicule du brevet:
08.03.89

(21) Numéro de dépôt: **86906257.0**

(22) Date de dépôt: **07.11.86**

(86) Numéro de dépôt international:
**PCT/CH 86/00155**

(87) Numéro de publication internationale:
**WO 87/02932 (21.05.87 Gazette 87/11)**

(51) Int. Cl.⁴: **B 29 C 47/06**

(54) DISPOSITIF POUR CHANGER DE COULEUR EN COURS D'EXTRUSION D'UNE GAINE AUTOUR D'UN CONDUCTEUR.

(30) Priorité: **08.11.85 FR 8516809**

(43) Date de publication de la demande:
**19.11.87 Bulletin 87/47**

(45) Mention de la délivrance du brevet:
**08.03.89 Bulletin 89/10**

(84) Etats contractants désignés:
**AT CH DE FR GB IT LI SE**

(56) Documents cité:
**DE-B-1 222 656**
**FR-A-2 400 424**
**US-A-3 486 195**
**US-D-324 739**

(73) Titulaire: **SWISSCAB E.A. SCHÖN S.A., Chemin des Cerisiers, CH- 1462 Yvonand (CH)**

(72) Inventeur: **ASTE, Robert, Valentin 68, CH- 1400 Yverdon- les- Bains (CH)**
Inventeur: **BLOCH, Peter, CH- 1351, Montcherand (CH)**

(74) Mandataire: **Nithardt, Roland, CABINET ROLAND NITHARDT Attn: Cabinet MOSER & CIE Rue Edouard Verdan 15, CH- 1400 Yverdon- les- Bains (CH)**

## Description

La présente invention concerne un dispositif pour changer de couleur en cours d'extrusion d'une gaine en matière synthétique autour d'un conducteur, comprenant une tête d'extrusion pourvue d'au moins deux conduits d'entrée de matière synthétique, reliés respectivement a deux orifices traversés par un conducteur pour permettre d'extruder autour de celui-ci une gaine formée de deux couches, et des moyens de distribution pour relier de manière sélective ces conduits d'entrée a une première et une seconde extrudeuse de matière synthétique.

En plus de la grande diversité dans les types de fils et de câbles électriques isolés que les utilisateurs demandent à l'industrie de la câblerie, chaque type de câble ou de fil peut avoir une gaine de diverses couleurs à des fins d'identification des conducteurs. On peut utiliser jusqu'à onze couleurs, seules ou en combinaison. Or, les utilisateurs demandent souvent aux fabricants, notamment dans le domaine des câbles spéciaux, de fabriquer des quantités relativement petites de fils isolés par une gaine d'une couleur déterminée, ce qui pose d'énormes problèmes de fabrication. En effet, il est pratiquement impossible d'avoir en stock tous les types de produits et dans toutes les couleurs.

Dans une ligne d'isolation par extrusion d'une gaine en matière synthétique, chaque fois qu'il faut changer de couleur de gaine, les têtes d'extrusion et les extrudeuses qui leur fournissent sous pression la matière synthétique doivent être entièrement purgées, afin que la couleur précédente n'influence plus la nouvelle couleur de la gaine extrudée sur le conducteur. Cette opération de purge nécessite en général un arrêt de la ligne d'isolation, c'est-à-dire une perte sensible de rendement des équipements de fabrication. En outre, cette purge occasionne une importante quantité de déchets, lesquels ne sont généralement pas réutilisables puisque leur couleur n'est pas pure. Or, ces matières premières sont relativement coûteuses et représentent une part importante du coût du produit fini. Par conséquent, chaque opération de changement de couleur augmente le prix unitaire du produit, surtout pour un produit fabriqué en petite quantité.

Une solution permettant d'éviter un arrêt de fabrication consiste à charger dans l'extrudeuse la matière synthétique de la nouvelle couleur pendant qu'on continue à produire une gaine de l'ancienne couleur avec le solde de matière se trouvant dans la machine. Toutefois, il subsiste quand même une importante quantité de matière ayant une couleur bâtarde et devant être évacuée soit par une purge avec arrêt de la fabrication, soit par fabrication d'une gaine de rebut.

Une autre solution est fournie par la demande de brevet DE-B-1 222 656, qui décrit un dispositif du type indiqué en préambule. Les deux extrudeuses sont disposées de part et d'autre de la tête et chacune d'elle est raccordée de manière sélective à deux conduits respectifs d'entrée correspondant chacun à une couche de la gaine, par l'intermédiaire d'un distributeur à boisseau pivotant qui dirige la matière vers l'un des conduits, l'autre étant alors inutilisé. Il y a donc deux distributeurs et quatre conduits d'entrée. Pour effectuer un changement de la couleur apparente de la gaine, on charge au préalable la matière ayant la nouvelle couleur dans l'extrudeuse qui alimente la couche intérieure et l'on poursuit l'extrusion jusqu'à ce que cette matière ait complètement remplacé la précédente dans l'extrudeuse et dans la tête d'extrusion. On arrête alors brièvement la ligne de fabrication et l'on actionne les deux distributeurs pour permuter les alimentations, la matière de la nouvelle couleur passant ainsi de la couche intérieure à la couche extérieure apparente de la gaine quand l'extrusion recommence.

Un inconvénient de ce dispositif est le fait qu'il faut arrêter la ligne de fabrication. Un autre inconvénient est constitué par les conduits d'entrée qui ne sont pas utilisés, pendant une période qui peut être assez longue. Comme la matière qui stagne dans ces conduits ne peut pas être purgée, elle produira une certaine longueur de gaine de rebut au prochain changement de couleur, mais surtout elle tend à se décomposer, ce qui peut encrasser ou boucher les conduits ou les filières de la tête d'extrusion. Enfin, la construction décrite est relativement compliquée et nécessite des moyens pour assurer le synchronisme des deux distributeurs.

La présente invention a donc pour but de remédier aux inconvénients susmentionnés, en fournissant un dispositif de changement de couleur en cours d'extrusion d'une gaine, permettant d'éviter des arrêts de la ligne de fabrication, de supprimer dans une large mesure la production de déchets et d'assurer ainsi que de petites longueurs peuvent être fabriquées d'une manière économique.

Dans ce but, l'invention prévoit un dispositif d'extrusion du type indiqué en préambule caractérisé en ce que les moyens de distribution comprennent un distributeur raccordé d'une part aux deux extrudeuses et d'autre part à un premier et a un second conduit d'entrée de la tête et des moyens de commande du distributeur, celui-ci étant pourvu d'un organe mobile qui comporte au moins une paire de canaux directs, mettant en communication la première extrudeuse avec le premier conduit d'entrée et respectivement la seconde extrudeuse avec le second conduit d'entrée dans une position déterminée dudit organe mobile, et une paire de canaux inverses, mettant en communication la première extrudeuse avec le second conduit d'entrée et respectivement la seconde extrudeuse avec le premier conduit d'entrée dans une autre position dudit organe mobile.

De préférence, ledit organe mobile comporte en outre des canaux de purge, agencés pour mettre en communication la première et/ou la seconde extrudeuse avec des conduits d'évacuation.

Selon une première forme de réalisation, ledit organe mobile est un boisseau rotatif ayant une forme sensiblement cylindrique. De préférence, les extrémités des canaux inverses sont décalées de 90° répartis par rapport aux extrémités des canaux directs, et les moyens de commande du distributeur comportent un moteur fonctionnant dans un seul sens de rotation.

Selon une autre forme de réalisation, ledit organe mobile est un tiroir agencé pour coulisser dans le corps du distributeur. En outre, ce tiroir peut aussi être pivotant.

La présente invention et ses avantages seront mieux compris à l'aide de la description d'une forme de réalisation préférée et de diverses variantes, cette description étant donnée ci-dessous à titre d'exemple et en référence aux dessins annexés, dans lesquels:

La figure 1 est une vue générale en plan d'un dispositif selon l'invention,

La figure 2 est une vue en coupe schématique d'une tête d'extrusion et d'un distributeur rotatif appartenant au dispositif de la fig. 1 et représenté dans une première position de fabrication,

Les figures 3 à 5 sont des vues analogues à la fig. 2 et représentent d'autres positions de fabrication,

Les figures 6 et 7 sont des vues analogues à la fig. 2, représentant deux positions de purge, et

La figure 8 est une vue en coupe schématique d'un distributeur à tiroir.

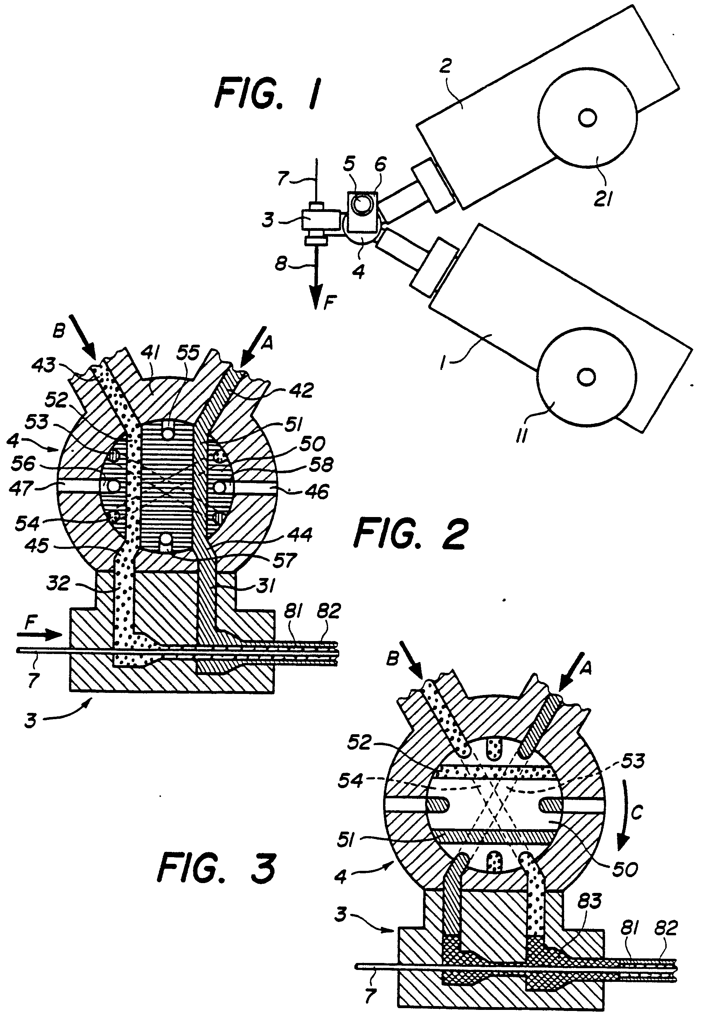

En référence à la fig. 1, le dispositif selon l'invention comprend une première extrudeuse 1 et une seconde extrudeuse 2, une tête d'extrusion 3 et un distributeur 4 qui est raccordé à la fois aux deux extrudeuses et 2 et à la tête d'extrusion 3. Le distributeur 4 est commandé notamment au moyen d'un moteur électrique 5 et d'un réducteur 6 équipé d'un système d'indexage. Les extrudeuses 1 et 2 sont de type classique; elles comportent une trémie d'alimentation respective 11, 21 dans laquelle on déverse la matière synthétique brute que l'extrudeuse va chauffer et délivrer sous pression à la tête d'extrusion 3' d'une manière qui sera décrite plus loin plus en détail. Un conducteur 7 défile suivant la flèche F à travers la tête d'extrusion 3, au moyen de laquelle une gaine isolante 8 en matière synthétique est extrudée autour du conducteur 7.

La tête d'extrusion 3 représentée schématiquement sur les figures est une tête du type bien connu à double couche, permettant de former sur le conducteur 7, en une seule opération d'extrusion à travers deux filières successives entourant ce conducteur 7 une gaine de matière synthétique comprenant une couche intérieure 81 et une couche extérieure 82 qui peuvent être de couleurs différentes, mais dont seule la couche extérieure 82 est visible. Le cas échéant, cette tête d'extrusion peut aussi comporter un dispositif additionnel pour incruster des bandes colorées d'identification sur la surface extérieure de la gaine. Dans tous les cas, la tête d'extrusion 3 comporte un premier conduit d'entrée 31, relié à la première filière pour lui délivrer normalement la matière synthétique destinée à former la couche extérieure 82 de la gaine, et un second conduit d'entrée 32 relié à la seconde filière pour lui délivrer normalement la matière synthétique destinée à former la couche intérieure 81.

Le distributeur 4, dans sa forme de réalisation préférée illustrée par les figures 2 à 1, comporte un corps métallique 41 pourvu d'un alésage central essentiellement cylindrique, de deux conduits d'entrée 42 et 43 qui sont raccordés respectivement aux extrudeuses 1 et 2, et de deux conduits de sortie 44 et 45 qui sont raccordés respectivement aux conduits d'entrée 31 et 32 de la tête d'extrusion. Dans l'exemple illustre ici, le corps 41 comporte également deux conduits latéraux d'évacuation 46 et 47. Ces six conduits débouchent dans l'alésage central du corps 41 en des points qui sont situés dans un même plan transversal par rapport à cet alésage et qui sont décalés entre eux de 66°.

Un boisseau essentiellement cylindrique 50 est monté de manière rotative dans l'alésage central du corps 41. Ce boisseau renferme plusieurs groupes de canaux agencés pour faire communiquer de manière sélective les conduits d'entrée 42 et 43 avec les conduits de sortie ou les conduits d'évacuation du distributeur. Deux canaux directs 51 et 52, parallèles entre eux, sont agencés pour relier d'une part le conduit d'entrée 42 au conduit de sortie 44, et d'autre part le conduit d'entrée 43 au conduit de sortie 45, dans la position du boisseau 50 représentée sur la fig. 2. De cette manière, le distributeur 4 fait communiquer la première entrée 31 de la tête d'extrusion avec l'extrudeuse 1, fournissant de la matière suivant la flèche A. En même temps, la seconde extrudeuse, fournissant de la matière suivant la flèche B, est mise en communication avec la seconde entrée 32 de la tête d'extrusion.

Le boisseau renferme également deux canaux inverses 53 et 54 qui sont également disposés de manière à communiquer simultanément avec les conduits d'entrée 42 et 43, mais qui se croisent sans se couper à l'axe du boisseau de manière à faire communiquer respectivement dans la position illustrée par la fig. 3, le conduit d'entrée 42 avec le conduit de sortie 45, et le conduit d'entrée 43 avec le conduit de sortie 44. Dans cette position du boisseau 50, la première extrudeuse alimente suivant la flèche A la couche intérieure 81 de la gaine tandis que la seconde extrudeuse alimente suivant la flèche B la couche extérieure 82. Le boisseau 50 doit effectuer une rotation de 90° pour passer de la position de la fig. 2 à celle de la fig. 3 et réciproquement.

En outre, le boisseau 50 renferme quatre canaux de purge 55 à 58 qui comportent chacun un orifice d'entrée situé sur la piriphérie du boisseau, dans le même plan que les orifices des canaux 51 à 54, et un orifice de sortie situé sur une face frontale du boisseau. Il faut remarquer que tous les orifices situés sur la périphérie du boisseau sont décalés entre eux de 30°, de sorte qu'à chaque rotation de 30° du boisseau 50, chacun des conduits d'entrée 42 et 43 communique avec un nouveau canal.

Le boisseau 50 est actionné et positionné de manière appropriée par l'ensemble motoréducteur 5, 6, le dispositif d'indexage qui lui est associé et éventuellement un appareillage de commande à distance qui coordonne l'ensemble du fonctionnement de la ligne d'isolation. Ces éléments sont connus dans le domaine technique considéré et leur construction n'a pas besoin d'être décrite ici en détail. Grâce à la disposition symétrique des canaux dans le boisseau, celui-ci peut tourner toujours dans le même sens, ce qui permet d'utiliser un moteur peu coûteux.

Pendant le fonctionnement le distributeur 4 est maintenu à une temperature suffisante, tout comme la tête d'extrusion 3, au moyen d'éléments chauffants (non représentés) qui sont généralement disposés sur ses faces extérieures. Ainsi, la matière synthétique se trouvant dans les différents canaux du distributeur reste suffisamment chaude et fluide.

Les figures 2 et 3 illustrent deux phases essentielles du procédé selon l'invention. La position directe du boisseau 50, représentée sur la fig. 2, est considérée ici comme point de départ du processus de changement de couleur, lequel consiste essentiellement à changer la couleur de la gaine extérieure 82, c'est-à-dire la couleur apparente du câble gainé. Avant le changement, la gaine extérieure 82 présente la première couleur, à savoir celle de la matière débitée par la première extrudeuse 1. Dans la phase illustrée par la fig. 2, la seconde extrudeuse 2 débite déjà de la matière présentant la seconde couleur, c'est-à-dire la future couleur de la gaine extérieure après le changement.

Le changement de couleur s'opère par une rotation rapide de 90° du boisseau 50, qui tourne dans le sens de la flèche C de la fig. 3 et prend la position représentée par cette figure. Les matières synthétiques débitées par les extrudeuses 1 et 2 circulent alors dans les canaux inverses 53 et 54 et chassent devant elles, à l'intérieur de la tête d'extrusion 3, les soldes de matière de couleurs différentes qui s'y trouvent. Bien entendu, un mélange de matières de couleur différente peut se produire, mais avec ce dispositif il est limité au faible volume de matière synthétique se trouvant dans la tête d'extrusion 3. Ce petit volume 83 est représenté en hachures croisées sur la fig. 3. Il est rapidement évacué de la tête sous forme d'un tronçon de gaine de rebut qui est relativement court. En fait, seuls les mélanges de couleur apparaissant dans la couche extérieure 82 de la gaine sont réellement génants.

Avant la permutation des couleurs, quand le boisseau 50 se trouve dans la position de la fig. 2, la seconde extrudeuse pouvait débiter (suivant la flèche B) une matière d'une autre couleur. On charge simplement cette extrudeuse avec de la matière de la seconde couleur et on laisse partir dans la couche intérieure 81 de la gaine tout le solde de l'ancienne couleur et la matière dans laquelle les deux couleurs successives sont mélangées. Dès que la seconde extrudeuse ne débite plus que de la matière de couleur pure, on peut opérer le changement de couleur en faisant tourner le boisseau 50 de 90°, jusqu'à la position de la fig. 3. Dans cette position, on peut ensuite charger la première extrudeuse d'une matière de couleur différente.

On peut facilement prévoir dans le corps 41 du distributeur, à 30° de part et d'autre des conduits 46 et 47, des orifices de purge (non représentés) qui permettent de purger ou nettoyer à partir de l'extérieur les deux canaux inverses 53 et 54 inutilisés dans la position de la fig. 2, et les deux canaux directs 51 et 52 inutilisés dans la position de la fig. 3. Ainsi, de la matière synthétique ne peut stagner dans aucun conduit du dispositif.

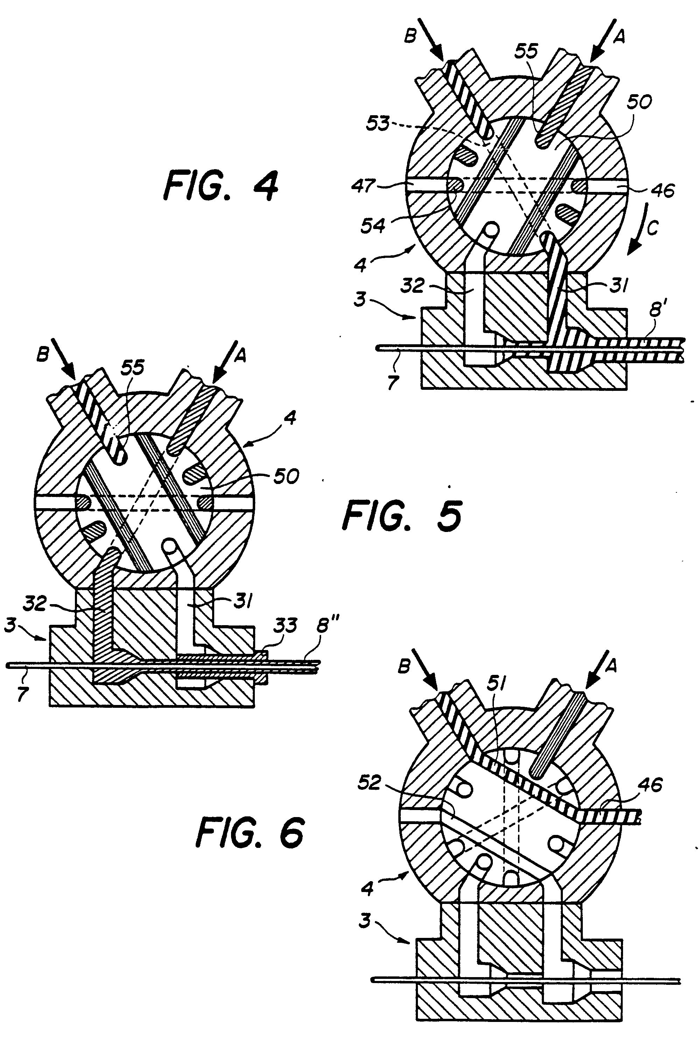

Les figures 4 et 5 illustrent deux modes d'utilisation du dispositif selon l'invention pour extruder une gaine ne comportant qu'une seule couche. Dans le cas de la fig. 4, la matière débitée suivant la flèche B par la seconde extrudeuse est dirigée par le canal inverse 53 vers le premier conduit d'entrée 31 de la tête d'extrusion, tandis que la première extrudeuse se trouve en situation de purge à travers le canal de purge 55 du boisseau 50, de sorte que le second conduit d'entrée 32 de la tête d'extrusion n'est plus alimenté. On extrude ainsi autour du conducteur 7 une gaine monocouche épaisse 8'. On peut ensuite, par une rotation de 60° du boisseau 50 dans le sens de la flèche C rétablir l'alimentation du conduit d'entrée 32 sans changer la couleur apparente de la gaine.

Dans le cas de la fig. 5, seul le second conduit d'entrée 32 de la tête d'extrusion 3 est alimenté en matière synthétique, suivant la flèche A. Une filière de réduction 33 adaptée dans la tête d'extrusion permet de réaliser ainsi une gaine monocouche mince 8''. Pendant ce temps, la seconde extrudeuse est purgée suivant la flèche B à travers le canal de purge 55 du boisseau 50.

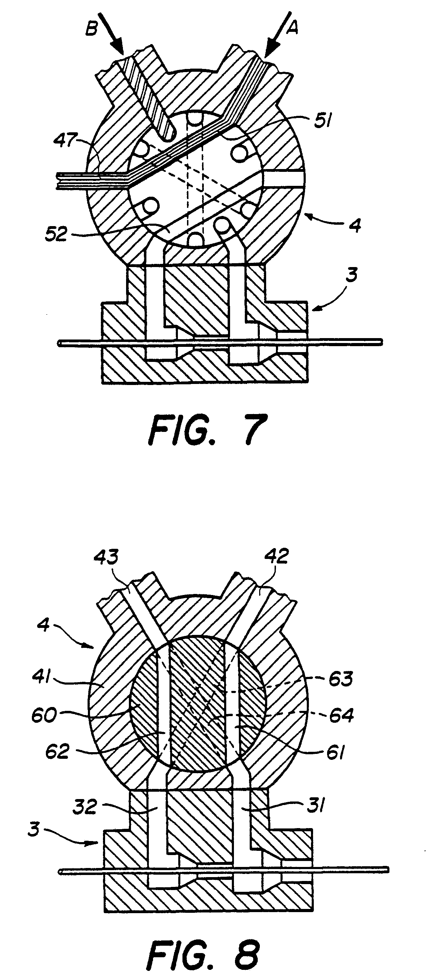

Les figures 6 et 7 représentent à titre d'exemple deux autres positions du boisseau 50 permettant de purger simultanément la première extrudeuse (flèche A) et la seconde extrudeuse (flèche B) pendant une interruption de la fabrication. Il est évident que les conduits d'évacuation 46 et 47 ou d'autres conduits disposés en face de la face frontale du boisseau 50 peuvent être raccordés à des dispositifs de récupération de la matière synthétique, notamment pour la recycler dans les extrudeuses. Les positions du distributeur représentées sur les figures 6 et 7 permettent également d'effectuer une purge périodique dans les canaux directs 51 et 52.

La figure 8 représente en coupe transversale une forme de réalisation d'un distributeur 4 dans lequel l'organe mobile est un tiroir 60 coulissant dans le corps 41. Le tiroir représenté a une forme essentiellement cylindrique, qui est facile à usiner mais il pourrait évidemment avoir une section transversale différente. Deux canaux directs parallèles 61 et 62 sont disposés dans un plan transversal du tiroir 60, tandis que deux canaux inverses 63 et 64, semblables aux canaux 53 et 54 décrits précédemment, ont des orifices respectifs qui sont situés dans un autre plan transversal du tiroir, de manière qu'un coulissement du tiroir 60 dans la direction perpendiculaire au plan de la figure permet de permuter l'alimentation des conduits d'entrée 31 et 32 de la tête d'extrusion 3 à partir des conduits d'entrée 42 et 43 du distributeur. Le cas échéant, le tiroir 60 pourrait aussi comporter des canaux de purge, ayant leurs orifices d'entrée dans d'autres plans transversaux que ceux des conduits 61 à 64. Selon une autre forme, il pourrait aussi être pivotant et comporter des canaux de purge respectifs débouchant dans les mêmes plans que les canaux directs et inverses. Ainsi, un mouvement de coulissement correspond à un changement de couleur et un pivotement correspond à une opération de purge, et le dispositif de commande est plus simple puisque les déplacements peuvent se faire entre deux positions définies par des butées.

La description qui précède montre qu'un dispositif selon l'invention permet d'effectuer des changements de couleur très rapidement, sans arrêter la fabrication et sans avoir des quantités importantes de déchets de matière première ou de produit de rebut. En outre, ce dispositif est une construction particulièrement simple et peu coûteuse et il peut facilement être assujetti à une commande automatique.

La présente invention n'est pas limitée aux formes de réalisation décrites ci-dessus à titre d'exemples, mais elle peut faire l'objet de diverses modifications et variantes évidentes pour l'homme de l'art. Par exemple, pour faciliter la réalisation des canaux croisés dans le boisseau, les conduits de sortie 44 et 45 du distributeur pourraient être disposés dans des plans transversaux différents. Par ailleurs, un dispositif similaire peut être utilisé pour les changements de couleur des bandes superficielles d'identification.

première (1) et une seconde (2) extrudeuse de matière synthétique, caractérisé en ce que les moyens de distribution comprennent un distributeur (4) raccordé d'une part aux deux extrudeuses (1 et 2) et d'autre part à un premier et à un second conduit d'entrée de la tête (3) et des moyens de commande (5, 6) du distributeur, celui-ci étant pourvu d'un organe mobile (50, 60) qui comporte au moins une paire de canaux directs (51 et 52, 61 et 62), mettant en communication la première extrudeuse (1) avec le premier conduit d'entrée (31) et respectivement la seconde extrudeuse (2) avec le second conduit d'entrée (32) dans une position déterminée dudit organe mobile, et une paire de canaux inverses (53 et 54, 63 et 64), mettant en communication la première extrudeuse avec le second conduit d'entrée et respectivement la seconde extrudeuse avec le premier conduit d'entrée dans une autre position dudit organe mobile.

2. Dispositif selon la revendication 1 caractérisé en ce que ledit organe mobile (50) comporte en outre des canaux de purge (55 à 57) agencés pour mettre en communication la première (1) et/'ou la seconde extrudeuse (2) avec des conduits d'évacuation (46, 47).

3. Dispositif selon la revendication 1 ou 2, caractérisé en ce que ledit organe mobile est un boisseau rotatif ( 50) ayant une forme sensiblement cylindrique.

4. Dispositif selon la revendication 3, caractérisé en ce que les extrémités des canaux inverses (53, 54) sont décalées d'un angle de 90° par rapport aux extrémités des canaux directs (51, 42).

5. Dispositif selon la revendication 4, caractérisé en ce que les moyens de commande du distributeur comportent un moteur (5) fonctionnant dans un seul sens de rotation.

6. Dispositif selon la revendication 1 ou 2, caractérisé en ce que ledit organe mobile est un tiroir (60) agencé pour coulisser dans le corps (41) du distributeur.

7. Dispositif selon la revendication 6, caractérisé en ce que ledit tiroir (60) est en outre pivotant.

8. Dispositif selon l'une quelconque des revendications précédentes, caractérisé en ce que le corps (41) du distributeur est équipé de moyens de chauffage.

## Revendications

1. Dispositif d'extrusion d'une gaine en matière synthétique autour d'un conducteur, comprenant une tête d'extrusion (3) pourvue d'au moins deux conduits d'entrée de matière synthétique reliés respectivement à deux orifices traversés par le conducteur (7) pour permettre d'extruder autour de celui-ci une gaine formée de deux couches, et des moyens de distribution pour relier de manière sélective ces conduits d'entrée à une

## Patentansprüche

1. Strangpreßvorrichtung für einen Mantel aus synthetischen Material um einen Leiter, die aus einem Extrusionskopf (3) besteht, der mit mindestens zwei Eingangskanälen für synthetisches Material ausgestattet ist, die jeweils mit zwei Mündungen verbunden sind, die vom Leiter (7) durchquert werden und die es erlauben, einen aus zwei Schichten bestehenden Mantel um den selben zu extrudieren, sowie Steuereinrichtungen zum wahlweisen Verbinden von Eingangskanälen einer ersten (1) und einer zweitein (2) Kunststoffspritzmaschine, dadurch gekennzeichnet, daß

die Steuereinrichtungen aus einem Verteiler (4) besteht, der einerseits an die zwei Extrudoren (1 und 2) und andererseits an einen ersten und zweiten Eingangskanal des Kopfes (3) angeschlossen ist, sowie einem Steuerteil (5, 6) des Verteilers, welcher mit einem beweglichen Teil (50, 60) ausgestattet ist, das aus mindestens einem Paar direkter Kanäle (50 und 51, 61 und 62) besteht, die den ersten Extruder (1) mit dem ersten Eingangskanal (31) bzw. den zweiten Extruder (2) mit dem zweiten Eingangskanal (32) in einer vorbestimmten Position des genannten mobilen bauteils in Verbindung bringt, sowie einem Paar entgegengesetzter Kanäle (53 und 54, 63 und 64), die den ersten Extruder mit dem zweiten Eingangskanal bzw. den zweiten Extruder mit dem ersten Eingangskanal in einer anderen Stellung des genannten beweglichen Bauteils in Verbindung bringen.

2. Vorrichtung gemäß Anspruch 1, dadurch gekennzeichnet, daß

das genannte bewegliche Bauteil (50) außerdem Entlüftungskanäle (55 bis 57) aufweist, die dazu bestimmt sind, den ersten (1) und/oder den zweiten (2) Extruder mit Evakuierungskanälen (46, 47) zu verbinden.

3. Vorrichtung gemäß Anspruch 1 oder 2, dadurch gekennzeichnet, daß

das genannte bewegliche Bauteil eine drehbare Buchse (50) ist, die eine im wesentlichen zylindrische Form aufweist.

4. Vorrichtung gemäß Anspruch 3, dadurch gekennzeichnet, daß

die Enden der entgegengesetzten Kanäle (53, 54) in einem Winkel von 90 Grad zu den Enden der direkten Kanäle (51, 52) versetzt sind.

5. Vorrichtung gemäß Anspruch 4, dadurch gekennzeichnet, daß

die Steuereinrichtungen des Verteilers einen Motor (5) aufweisen, der nur in eine Rotationsrichtung arbeitet.

6. Vorrichtung gemäß Anspruch 1 oder 2, dadurch gekennzeichnet, daß

das genannte bewegliche Bauteil ein Steuerschieber (60) ist, der dazu bestimmt ist, im Körper des Verteilers (41) zu gleiten.

7. Vorrichtung gemäß Anspruch 6, dadurch gekennzeichnet, daß

der genannte Steuerschieber (60) außerdem drehbar ist.

8. Vorrichtung gemäß eines beliebigen genannten Anspruches, dadurch gekennzeichnet, daß

der Körper des Verteilers (41) mit Mittel n zur Beheizung ausgestattet ist.

**Claims**

1. Device for extruding a sheath of synthetic material around a conductor, comprising an extruder head (3) provided with at least two inlet conduits for synthetic material respectively connected to two orifices traversed by the conductor (7) to enable extruding around the latter a sheath formed of two layers, and distributing means for selectively connecting these inlet conduits to a first (1) and a second (2) extruder for synthetic material, characterized in that the distributing means comprise a distributor (4) connected on one hand to the two extruders (1 and 2) and on the other hand to a first and a second inlet conduit of the head (3) and means (5, 6) for control of the distributor, the latter being provided with a mobile member (50, 60) which includes at least one pair of direct channels (51 and 52, 61 and 62) respectively providing communication of the first extruder (1) with the first inlet conduit (31) and of the second extruder (2) with the second inlet conduit (32) in a determined position of said mobile member, and a pair of inverted channels (53 and 54, 63 and 64), respectively providing communication of the first extruder with the second inlet conduit and of the second extruder with the first inlet conduit in another position of said mobile member.

2. Device according to claim 1, characterized in that said mobile member (50) further includes purging channels (55 to 57) adapted to provide communication of the first (1) and/or the second extruder (2) with discharge conduits (46, 47).

3. Device according to claim 1 or 2, characterized in that said mobile member is a rotating plug (50) having a substantially cylindrical form.

4. Device according to claim 3, characterized in that the extremities of the inverted channels (53, 54) are offset by an angle of 90° with respect to the extremities of the direct channels (51, 52).

5. Device according to claim 4, characterized in that the means for control of the distributor include a motor (5) operating in a single direction of rotation.

6. Device according to claim 1 or 2, characterized in that said mobile member is a slide (60) adapted for sliding motion in the body (41) of the distributor.

7. Device according to claim 6, characterized in that said slide (60) is also pivoting.

8. Device according to any one of the preceeding claims, characterized in that the body (41) of the distributor is equipped with heating means.

FIG. 1

FIG. 2

FIG. 3

FIG. 4

FIG. 5

FIG. 6

3

FIG. 7

FIG. 8

5